# EUROPÄISCHE PATENTSCHRIFT

(11) **EP 2 357 317 B1**
(45) Veröffentlichungstag und Bekanntmachung des Hinweises auf die Patenterteilung: **17.10.2018**
(21) Anmeldenummer: 11152493.0
(22) Anmeldetag: 28.01.2011
(51) Int. Cl.: E21B 33/13, E21B 33/14, E21B 43/114, E21B 33/10

(54) **Verfahren zur Sanierung einer Erdreich-Bohrung**
Method for renovating a borehole in the soil
Procédé de rénovation d'un forage dans la terre

(30) Priorität: 17.02.2010 DE 102010002064
(43) Veröffentlichungstag der Anmeldung: 17.08.2011
(73) Patentinhaber: Keller Holding GmbH, 63067 Offenbach/Main (DE)
(72) Erfinder: Dr. Ruch, Clemens, 79100 Freiburg (DE); Breder, Robert, 79104 Freiburg (DE); Schumacher, Norbert, 76549 Hügelsheim (DE); Heine, Dietmar, 08499 Mylau (DE)
(74) Vertreter: Oberwalleney, Stephan

(56) Entgegenhaltungen:
- WO-A1-2008/003184
- DE-B3-102007 016 682
- DE-C1- 4 439 546
- DE-U1-202005 004 815
- US-A- 2 718 264
- US-A- 3 100 535

## Beschreibung

Die Erfindung betrifft ein Verfahren zur Sanierung einer Erdreich-Bohrung, insbesondere einer Geothermiebohrung.
Aus der DE 44 39 546 C1 ist ein Verfahren zum dauerhaften Verschließen von Erdreich-Bohrungen bekannt, in welche zur Stabilisierung Kunststoffrohre eingebracht werden. Die Kunststoffrohre werden vor dem Einfüllen einer abdichtenden Masse mittels eines Düsenaggregats mit radial angeordneten Düsen geschlitzt, so dass die abdichtende Masse ungehindert durch diese Schlitze in das umgebende Erdreich eindringen kann.
Aus der DE 20 2009 000 462 U1 ist eine Vorrichtung zum Verfüllen eines Bohrlochs bekannt. Dabei wird der zwischen einem Rohr und einer Bohrlochwandung gebildete Ringraum mit einem Stützmedium verfüllt. Hierfür ist eine Fördereinrichtung zum Erzeugen einer Flüssigkeitsströmung sowie eine Einleitevorrichtung, mit der das Stützmedium in das Bohrloch eingeleitet wird, vorgesehen.
Aus der EP 2 035 656 B1 ist ein Verfahren zur Versiegelung der Wandung einer Tiefbohrung für Erdwärmesonden bekannt. Nach dem Einbringen der Erdwärmesonde, wird die Bohrung mit einem Verfüllmaterial hinterfüllt. Das Füllmaterial wird über ein Füllrohr eingebracht, das innerhalb der Sondenrohre angeordnet ist.
Aus der DE 10 2007 016 682 B3 ist ein Verfahren zum Einbau einer Erdwärmesonde in ein Bohrloch bekannt, dessen Umgebungsbereich abschnittsweise mit einem unter Hochdruck stehenden Druckmittel beaufschlagt wird. In das Bohrloch wird ein Manschettenrohr und die Erdwärmesonde eingehängt. Anschließend werden die das Manschettenrohr und die Erdwärmesonde umgebenden Freiräume des Bohrlochs mit einer abbindenden Füllmasse dicht verfüllt.

Aus der DE 10 2007 054 185 B3 ist ein Verfahren zur Installation einer Geothermiesonde bekannt, mit einem äußeren Rohr und einem inneren Rohr. Während des Bohrens wird eine Stützflüssigkeit in eines der Segmente des äußeren Rohres eingebracht. Es ist weiter vorgesehen, dass Wasser in das innere oder äußere Rohr so lange eingebracht wird, bis die darin verbliebene Stützflüssigkeit ausgespült ist.

Aus der US 3 100 535 A ist ein Zementierwerkzeug für ein Förderrohr bekannt. Um ungewünschte Perforationen im Rohr bzw. Zement zu verschließen, wird ein teleskopierbarer Apparat in das Rohr eingebracht. Der Apparat weist zwei gegeneinander teleskopierbare Ausziehdorne auf, die oben und unten über Packer gegenüber der Rohrinnenwandung abgedichtet sind. Zwischen den Packern ist ein zerbrechliches Zylinderrohr angeordnet. Zum Verschließen der Perforationen wird das zerbrechliches Zylinderrohr durch Aufbringen von hydraulischem Druck zerbrochen, so dass der darin enthaltene Zement in die Perforationen eingepresst wird.

Aus der US 2 718 264 A ist ein Verfahren bzw. Vorrichtung zum Isolieren von wasserführenden Formationen bekannt. Hierfür wird ein Strahlkanonenperforator mit einer Vielzahl von Auslässen verwendet. Es wird zunächst ein Stopfen in das Ölförderrohr unterhalb der wasserführenden Formation eingebracht. Dann wird der oberhalb des Stopfens liegende Rohrabschnitt mit Flüssigzement befüllt und der Strahlkanonenperforator in das Rohr eingeführt und die Ladungen zur Explosion gebracht, so dass der Flüssigzement durch die bei der Explosion entstehenden Perforationen aus dem zementummantelten Ölförderrohr herausgedrückt wird.

Bei der Einbringung von Bohrlöchern in Erdreich, beispielsweise von Geothermiebohrungen, kann es zum hydraulischen Verbinden unterschiedlicher Erdschichten kommen. Dabei kann es passieren, dass arthesisch gespanntes Grundwasser aus einem tiefer liegenden Grundwasserstockwerk durch möglicherweise ungenügende Bohrlochverfüllungen in eine darüberliegende, vor dem Herstellen der Erdreich-Bohrung hydraulisch nicht mit dem wasserführenden Stockwerk verbundene Gesteinsschicht fließt. Dabei kann es durch in die obere Gesteinsschicht eindringendes Wasser zu einer mineralischen oder chemischen Umwandlung kommen, beispielsweise durch Umwandlung eines Anhydrites in Gips, die zu einer Volumenzunahme führt, welche sich an der Erdoberfläche durch Bodenbewegungen auswirken kann, die wiederum mit Schäden an dort stehenden Gebäuden verbunden sein können.

Der vorliegenden Erfindung liegt die Aufgabe zugrunde, ein Verfahren zur Sanierung bzw. Abdichtung einer Erdreich-Bohrung, beispielsweise einer Geothermiebohrung, vorzuschlagen, das insbesondere eine zuverlässige Abdichtung verschiedener Erdschichten bzw. Grundwasser-Stockwerke gegeneinander ermöglicht.

Die Lösung liegt in einem Verfahren zur Sanierung bzw. Abdichtung einer Erdreich-Bohrung, in der zumindest ein Rohr eingelassen ist, das U-förmig gestaltet ist und einen ersten Rohrabschnitt, einen zweiten Rohrabschnitt und einen Umkehrabschnitt aufweist, der den ersten Rohrabschnitt mit dem zweiten Rohrabschnitt verbindet, wobei zwischen dem zumindest einen Rohr und der Bohrung ein Ringraum gebildet ist, mit den folgenden Verfahrensschritten:
Einbringen zumindest einer Öffnung in einen ersten Teilabschnitt des Rohres mittels einer in das Rohr eingeführten Vorrichtung; Einbringen eines Bindemittels in das zumindest eine Rohr, wobei das Bindemittel durch die zumindest eine Öffnung des Rohres in den Ringraum gelangt; und Ausspülen des Bindemittels aus dem zumindest einen Rohr.

Der Vorteil des erfindungsgemäßen Verfahrens besteht darin, dass der zwischen dem zumindest einen Rohr und der Erdreich-Bohrung gebildete Ringraum durch das Einbringen des Bindemittels zuverlässig abgedichtet wird. Damit wird verhindert, dass beispielsweise Wasser in ungewünschter Weise aus einer unteren Erdschicht durch den Bohrungsringraum in eine darüberliegende Erdschicht gedrückt wird. Die beiden Erdschichten bzw. Grundwasser-Stockwerke sind somit sicher gegeneinander hydraulisch abgedichtet. Dadurch, dass das Rohr nur über einen Teilabschnitt mit ein oder mehreren Öffnungen versehen wird, werden beim Einbringen des Bindemittels an den Öffnungen relativ hohe Drücke erreicht, so dass das Bindemittel tief in den Ringraum und das diesen umgebene Erdreich eindringen kann. Hierdurch ergibt sich eine besonders gute hydraulische Abdichtung zwischen zwei Erdschichten. Durch das Ausspülen des Bindemittels nach dem Einbringen wird überschüssiges Bindemittel wieder aus dem Rohr entfernt, so dass das Rohr für den nächsten Abdichtungsschritt nutzbar ist. Es lassen sich somit gezielt Teilabschnitte des Rohres bzw. des Ringraums zwischen dem Rohr und der Bohrung verpressen. Durch den Spülvorgang bleibt das Rohr gängig, um auch darunter liegende Bereiche erneut verpressen zu können, falls beispielsweise der Erfolg einer vorhergehenden Verpressung nicht ausreichend war, oder ein sonstiger Grund vorliegt, um tiefere Bereiche der Bohrung zu verpressen.

Das Bindemittel wird vorzugsweise mit Überdruck in das mit einer oder mehreren Öffnungen versehene Rohr eingebracht, wobei hierfür insbesondere ein Abdichtelement, wie ein sogenannter Kopfpacker, am Rohrende verwendet wird. Das Rohr kann prinzipiell beliebig sein, beispielsweise ein Geothermie-Sondenrohr. Besonders gut eignen sich Kunststoffrohre. Als Bindemittel zum Einbringen in den Ringraum eignen sich prinzipiell verschiedene bindende Stoffe, die sich in flüssigem Zustand in das Rohr bzw. den Ringraum einpressen lassen und aushärtbar sind. Das Bindemittel kann beispielsweise Zement sein, der vorzugsweise in einer Suspension enthalten ist. Als Bindemittel kann jedoch auch ein aushärtbarer Kunststoff, beispielsweise ein Kunstharz, verwendet werden, der durch die Öffnungen des Rohres in den Ringraum eingepresst wird, wo er dann aushärtet. Das Ausspülen des Bindemittels aus dem Rohr erfolgt vorzugsweise nach dem Andicken des eingebrachten Bindemittels bzw. der eingebrachten Bindemittelsuspension.

Das Einbringen der zumindest einen Öffnung wird vorzugsweise mittels eines Hochdruckwasserstrahls bewerkstelligt, und zwar insbesondere mittels einer Düsenvorrichtung. Hierfür wird die Düsenvorrichtung in das Rohr bis zu der gewünschten Tiefe eingeführt. Dann wird Wasser mit hohem Druck aus der bzw. den Düsen herausgepresst, wobei die Seitenwandung des Rohres an ein oder mehreren Stellen, je nach Anzahl der Düsen über dem Umfang, aufgeschnitten wird. Durch Hochziehen der Düsenvorrichtung während des Austretens des Wasserstrahls entstehen ein oder mehrere Öffnungen bzw. Schlitze im Rohr in Richtung der Längserstreckung des Rohres. Wichtig ist, dass die Parameter zum Einbringen der Öffnungen in den ersten Rohrabschnitt, insbesondere der Schneiddruck, so gewählt werden, dass der zweite Rohrabschnitt nicht beschädigt wird. Grundsätzlich ist es auch möglich die Löcher auf andere Weise in die Wandung des Rohres einzubringen, beispielsweise durch thermische Behandlung des Rohres in der gewünschten Tiefe oder durch mechanische Perforation, wobei hinsichtlich der letztgenannten Möglichkeit die Unversehrtheit eines benachbarten Rohres nicht sichergestellt werden kann. Das Einbringen der zumindest einen Öffnung in das Rohr erfolgt vorzugsweise über eine Länge von etwa 10 cm bis 50 cm.

Vorzugsweise erfolgt das Einbringen von Öffnungen bzw. Aufschneiden des zumindest einen Rohres in mehreren Schritten. Das bedeutet, dass in einem einzigen Arbeitsschritt nur eine definierte Höhe des Rohres aufgeschnitten wird. Je kürzer der mit Öffnungen versehene Teilabschnitt des Rohres ist bzw. je weniger Öffnungen über dem Umfang des Rohres vorgesehen werden, desto höher ist der Druck, welcher beim Einpressen des Bindemittels in jedem einzelnen Öffnungsbereich anliegt. Ein hoher Druck an der Öffnung bewirkt in vorteilhafter Weise, dass die Suspension tief in den Ringraum bzw. in das diesen umgebende Erdreich eindringen kann. Besonders günstig für eine gute Abdichtung ist es, wenn das Rohr, je Teilabschnitt, über eine Länge von etwa 10 cm bis 50 cm, insbesondere über eine Länge von etwa 25 cm bis 30 cm, mit ein oder mehreren Öffnungen versehen bzw. aufgeschnitten wird. Für eine gute Verteilung des Bindemittels ist es weiter günstig, wenn das Rohr an mehreren Stellen über dem Umfang aufgeschnitten wird.

Das Einbringen der Öffnungen in das Rohr erfolgt vorzugsweise in Abschnitten entlang der Länge des Rohres, d. h. zunächst wird ein erster Teilabschnitt mit zumindest einer Öffnung versehen, in welche das Bindemittel eingepresst wird; nach dem Ausspülen des überschüssigen Bindemittels aus dem Rohr wird anschließend ein zweiter Teilabschnitt des Rohres mit zumindest einer Öffnung versehen, in welche wiederum Bindemittel eingebracht wird, usw. Das Verfahren zur Abdichtung der Erdreich-Bohrung wird dabei vorzugsweise in Schritten von unten nach oben oder im Pilgerschritt von unten nach oben durchgeführt. Fallweise ist eine Durchführung des erfindungsgemäßen Verfahrens von oben nach unten ebenfalls geeignet.

Geothermie-Sondenrohre sind zumeist U-förmig gestaltet und weisen einen ersten Rohrabschnitt, einen zweiten Rohrabschnitt und einen Umkehrabschnitt auf, der den ersten Rohrabschnitt mit dem zweiten Rohrabschnitt verbindet. Vorzugsweise werden die Schritte Einbringen von Öffnungen in das Rohr und Einbringen eines Bindemittels nur in einem der beiden ersten und zweiten Rohrabschnitte vorgenommen, während der andere der beiden Rohrabschnitte unversehrt bleibt und somit in günstiger Weise für andere Zwecke zur Verfügung steht. Gemäß der Erfindung ist zumindest ein Rohr in der Erdbohrung vorgesehen. Es ist aber durchaus auch denkbar, dass mehrere Rohre, insbesondere auch U-förmige Rohre nach der obengenannten Art, in die Erdbohrung eingelassen sind. Dann lässt sich die Verdichtung des Ringraums bzw. die Sanierung der Erdbohrung gegebenenfalls nochmals verbessern.

Der zweite, nicht zur Bindemittelinjektion verwendete Rohrabschnitt, oder gegebenenfalls ein zweites Rohr, kann in vorteilhafter Weise zur Kontrolle der Abdichtungsmaßnahmen verwendet werden. Hierfür ist nach einem bevorzugten weiteren Verfahrensschritt vorgesehen, dass ein Temperatursensor in das zum Einfüllen des Bindemittels verwendete oder ein separates Rohr eingeführt wird, insbesondere etwa bis zur Tiefe des aufgeschnittenen Teilabschnitts des für die Bindemittelinjektion verwendeten ersten Rohrabschnitts. Bei Verwendung eines U-förmigen Sanierungsrohres, wie ein Geothermie-Sondenrohre, wird vorzugsweise der unversehrte Rohrabschnitt zum Messen der Temperatur verwendet, der nicht mit Öffnungen zum Einbringen des Bindemittels versehen worden ist. Das Messen der Temperatur kann auch in einem separaten Rohr durchgeführt werden, das in der Erdreich-Bohrung gemeinsam mit dem Sanierungsrohr einliegt und in das der Temperatursensor entsprechend einzuführen ist.

Ein Sinken der gemessenen Temperatur deutet bei einer exothermen, chemischen Reaktion wie der Umwandlung von Anhydrid und Wasser zu Gips auf eine reduzierte chemische Reaktion im Gestein hin. Die Temperatur wird vorzugsweise an mehreren Stellen entlang des Rohrabschnitts gemessen, und zwar zumindest etwa in der Tiefe des mit Öffnungen versehenen Teilabschnitts, in den Bindemittel eingebracht worden ist. Dabei werden die über der Länge des Rohrabschnitts gemessenen Temperaturen erfasst und miteinander verglichen. Das Messen der Temperatur darf erst nach dem Abbinden des eingebrachten Bindemittels erfolgen, da sonst dessen Hydratationswärme gemessen wird.

Beim Durchbohren einer Anhydrid-Erdschicht kann es dazu kommen, dass aus einer vormals gegenüber der Anydridschicht hydraulisch abgedichteten wasserhaltigen Erdschicht Wasser durch den Bohrungsringraum in die Anydridschicht gelangt. Die Anydridschicht nimmt Wasser auf, wodurch Gips entsteht. Bei dieser chemischen Reaktion entsteht Wärme. Das Messen der Temperatur ermöglicht nun in vorteilhafter Weise Rückschlüsse auf die hydraulische Abdichtung zwischen zwei benachbarten Erdschichten zu ziehen. Wird nämlich festgestellt, dass die Temperatur in der Tiefe der Anydridschicht höher ist, als in den darüber oder darunterliegenden Erdschichten, bedeutet dies, dass hier eine chemische Reaktion durch Verbinden von Wasser mit der Anhydridschicht zu Gips stattfindet. Das bedeutet wiederum, dass der Bohrungsringraum noch nicht hinreichend abgedichtet ist. Ist dagegen die Temperatur über der Tiefe in der Anhydridschicht sowie den angrenzenden Erschichten konstant, bzw. entspricht dem Gradienten der natürlichen Erdwärme, bedeutet dies, dass keine chemische Reaktion mehr stattfindet. Der Bohrungsringraum ist zuverlässig abgedichtet und die Erdschichten sind hydraulisch voneinander getrennt. Insgesamt lässt sich also durch das Messen der Temperatur entlang des Rohres lokalisieren, ob in einem Bereich exotherme oder endotherme chemische Reaktionen stattfinden, oder nicht. Hiermit ist eine zuverlässige Kontrollmöglichkeit gegeben, um in vorteilhafter Weise die Sanierung der Erdreich-Bohrung zu gewährleisten.

Das erfindungsgemäße Verfahren kann prinzipiell nach zwei Arten durchgeführt werden, die einander ähneln, nämlich nach dem Kontraktor-Injektionsverfahren oder nach dem Umlauf-Injektionsverfahren.

Gemäß dem Kontraktor-Injektionsverfahren ist vorgesehen, dass vor dem Aufschneiden des ersten Rohrabschnitts des U-förmigen Rohrs der Umkehrabschnitt zur Erzeugung eines Druckwiderlagers verschlossen wird. Vorzugsweise wird hierfür ein Bindemittel in den Umkehrabschnitt eingebracht, welches zunächst aushärten muss, bevor das Aufschneiden des darüberliegenden Rohrabschnitts durchgeführt wird. Zum Verschließen des Umkehrabschnitts wird ein Kontraktorschlauch in das mit Wasser gefüllte Rohr herabgelassen, durch welchen das Bindemittel in den Umkehrabschnitt zur Ausbildung des Druckwiderlagers gedrückt wird. Das Verschließen des Rohres kann aber grundsätzlich auch auf andere Weise erfolgen, beispielsweise durch Verschmelzen des Rohres.

Nach dem Verschließen des Rohres wird, wie oben bereits beschrieben, der darüberliegende Rohrabschnitt, vorzugsweise in Teilschritten, mit ein oder mehreren Öffnungen versehen, durch welche dann Bindemittel zum Verdichten des Bohrungsringraums eingebracht wird. Zum Einbringen des Bindemittels wird auf das Rohrende ein Abdichtelement, insbesondere ein Kopfpacker aufgesetzt, welcher das Einpressen des Bindemittels in das Rohr mit hohen Drücken ermöglicht. Nach dem Andicken des Bindemittels wird das in dem Rohr befindliche überschüssige Bindemittel durch einen Spülvorgang entfernt. Hierfür wird ein Spülschlauch in den mit Bindemittel gefüllten Rohrabschnitt eingeführt und zwar insbesondere zumindest etwa bis zum Druckwiderlager. Durch Zugabe von Wasser durch den Schlauch wird das darüberliegende Bindemittel nach oben hin aus dem Rohrabschnitt ausgespült. Nach dem Ausspülen kann der nächste Teilabschnitt durch entsprechendes Aufschneiden und Einbringen von Bindemittel behandelt werden.

In bevorzugter Ausgestaltung ist während des Einbringens des Bindemittels in das Rohr als weiterer Verfahrensschritt vorgesehen: Messen eines für den Druck des Bindemittels in dem Rohr repräsentativen Drucksignals und/oder eines für den Durchfluss des Bindemittels repräsentativen Durchflusssignals. Vorzugsweise erfolgt das Einbringen des Bindemittels in das Rohr in Abhängigkeit von dem Drucksignal und dem Durchflusssignal. Hiermit lässt sich die Menge des in den Ringraum eingebrachten Bindemittels genau bestimmen. Dabei wird der Vorgang des Einbringens des Bindemittels insbesondere beendet, wenn das Drucksignal und das Durchflusssignal einen vorgegebenen Wert erreicht haben.

Beim Umlauf-Injektionsverfahren wird zunächst der erste Teilabschnitt des Rohres mit ein oder mehreren Öffnungen versehen, durch welche dann Bindemittel zum Abdichten des Bohrungsringraums eingebracht wird. Vor dem Einbringen des Bindemittels wird auf das Ende des ersten Rohrabschnitts ein erstes Abdicht- bzw. Anschlusselement aufgesetzt und auf das Ende des zweiten Rohrabschnitts wird ein zweites Abdicht- bzw. Anschlusselement aufgesetzt. Das Einbringen des Bindemittels erfolgt nun durch das erste Ende bzw. das hierauf aufgesetzte erste Abdichtelement hindurch in den ersten Rohrabschnitt. Durch diesen fließt das Bindemittel hindurch, wobei am Ort des aufgeschnittenen Rohres ein Teil des Bindemittels aufgrund des Pumpendrucks und des hydrostatischen Drucks durch den Schnitt bzw. die Schnitte in den das Rohr umgebenden Ringraum entweicht. Der restliche Anteil fließt weiter den ersten Rohrabschnitt entlang, durch das Umkehrstück und den zweiten Rohrabschnitt wieder hinauf, wo es am zweiten Ende bzw. dem hierauf aufgesetzten zweiten Abdichtelement des zweiten Rohrabschnitts wieder austritt.

Nach einer bevorzugten Weiterbildung ist vorgesehen, dass während des Einbringens des Bindemittels in das Rohr ein für den Durchfluss des Bindemittels durch den ersten Rohrabschnitt repräsentatives erstes Durchflusssignal, vorzugsweise auch ein für den Durchfluss des Bindemittels durch den zweiten Rohrabschnitt repräsentatives zweites Durchflusssignal gemessen wird. Hiermit wird ermöglicht, dass das Einbringen des Bindemittels in das Rohr in Abhängigkeit von dem Durchfluss durch die beiden Rohrabschnitte erfolgen kann. Es ist insbesondere vorgesehen, dass der Vorgang des Einbringens des Bindemittels beendet wird, wenn das Durchflusssignal des ersten Rohrabschnitts dem Durchflusssignal des zweiten Rohrabschnitts zumindest etwa angenähert ist. Alternativ oder in Ergänzung kann an einem oder beiden Rohrenden neben dem Durchfluss auch der Druck gemessen werden. Beide Rohrenden sind vorzugsweise mit Schiebern versehen, um den Durchfluss des Bindemittels stufenlos regeln zu können. Dies wird genutzt, um durch teilweises Schließen des Schiebers am Ausrittsrohr den Druck im Rohr künstlich zu erhöhen. Der Injektionsvorgang wird beendet, wenn sich die gemessenen Durchflussmengen von eingebrachtem und ausgetretenen Bindemittel nicht mehr wesentlich voneinander unterscheiden.

Nach dem Injizieren des Bindemittels in dem ersten Teilabschnitt wird das gesamte Rohr mit Wasser durchspült, insbesondere im Umlaufverfahren. Hierfür werden die beiden Anschlusselemente entfernt. Nach dem Ausspülen kann der nächste Teilabschnitt verpresst werden. Hierfür werden die obengenannten Schritte erneut durchgeführt. Damit beim Ausspülen des Rohres kein Wasser durch die Öffnungen in den Bohrungsringraum gelangt, erfolgt der Schritt des Ausspülens vorzugsweise erst nach dem Andicken des injizierten Bindemittels.

Nach einer bevorzugten Ausgestaltung ist beim Umlaufverfahren vorgesehen, dass zum hydraulischen Trennen der beiden Medien, Wasser und Bindemittel, ein Trennkörper, insbesondere eine Schwammkugel, in das Rohr eingesetzt wird. Vor dem Einbringen des Bindemittels wird der Trennkörper in das mit Wasser gefüllte Rohr eingesetzt. Anschließend wird das Bindemittel eingepresst, wobei das Bindemittel die in Durchflussrichtung vor dem Trennkörper befindliche Wassersäule aus dem Rohr herauspresst. Nach dem Einbringen des Bindemittels im Umlaufverfahren wird zum Spülen wieder ein Trennkörper in das Rohr eingesetzt, wobei die in Durchflussrichtung vor dem Trennkörper befindliche Bindemittelsäule aus dem Rohr herausgepresst wird. Das Spülen erfolgt, wie das Einbringen des Bindemittels, vorzugsweise ebenfalls im Umlaufverfahren.

Bevorzugte Ausführungsformen werden nachstehend anhand der Zeichnungen beschrieben. Hierin zeigt:
- Figur 1: ein erfindungsgemäßes Verfahren zur Sanierung einer Erdreichbohrung in einer ersten Ausführungsform schematisch im Längsschnitt durch die Bohrung
a) nach dem Verschließen des Umkehrabschnitts;
b) beim Aufschneiden des Rohres mittels eines Hochdruckwasserstrahls;
c) beim Einpressen eines Bindemittels in den aufgeschnittenen Rohrabschnitt;
d) beim Ausspülen des Bindemittels aus dem aufgeschnittenen Rohrabschnitt;
- Figur 2: ein erfindungsgemäßes Verfahren zur Sanierung einer Erdreichbohrung in einer zweiten Ausführungsform schematisch im Längsschnitt
a) beim Aufschneiden eines der Rohrabschnitte mittels eines Hochdruckwasserstrahls;
b) beim Einpressen eines Bindemittels in das Rohr;
c) beim Ausspülen des Bindemittels aus dem Rohr mit Wasser;
- Figur 3: ein erfindungsgemäßes Verfahren zur Sanierung einer Erdreichbohrung in einer abgewandelten Ausführungsform schematisch im Längsschnitt beim Ausspülen des Bindemittels aus dem Rohr; und
- Figur 4: schematisch einen Schnitt durch das Erdreich, in dem eine Erdreichbohrung und verschiedene Erdreichschichten zu erkennen sind.

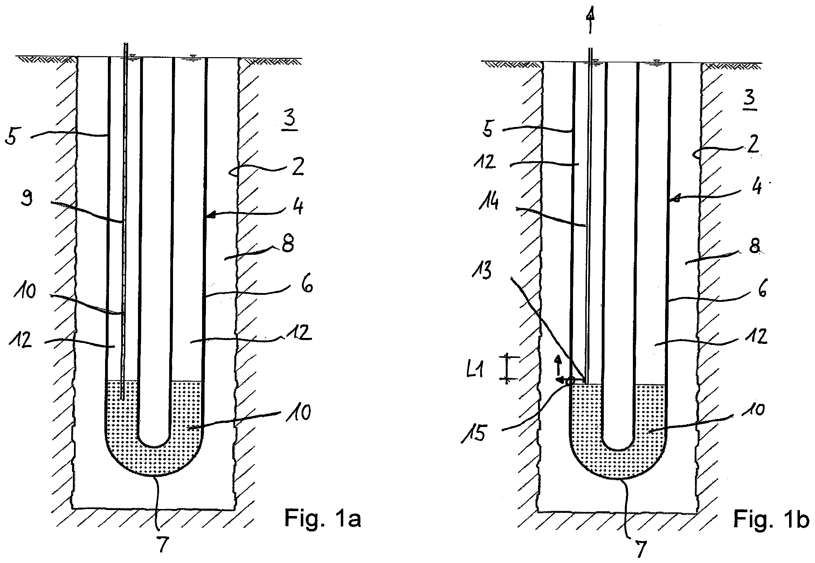

Die Figuren 1a) bis 1d), welche im folgenden gemeinsam beschrieben werden, zeigen ein erfindungsgemäßes Verfahren zum Sanieren einer Erdreichbohrung gemäß einer ersten Ausführungsform. Es ist ein Bohrloch 2 erkennbar, welches in das Erdreich 3 eingebracht ist. Das Bohrloch 2 kann prinzipiell eine beliebige Tiefe haben, insbesondere eine Tiefe von 100 m bis 200 m aufweisen. Der Durchmesser des Bohrloches 2 beträgt vorzugsweise etwa zwischen 5 cm und 15 cm. In dem Bohrloch 2 ist ein Rohr 4 eingelassen, das beispielsweise ein Geothermie-Sondenrohr sein kann mit einem Rohrdurchmesser von insbesondere 20 mm bis 40 mm. Es ist erkennbar, dass das Rohr 4 U-förmig gestaltet ist und einen ersten weitestgehend vertikalen Rohrabschnitt 5, einen zweiten im wesentlichen vertikalen Rohrabschnitt 6 sowie einen Umkehrabschnitt 7 aufweist, der den ersten Abschnitt 5 mit dem zweiten Abschnitt 6 verbindet. Es ist ferner ein Ringraum 8 zwischen dem Rohr 4 und der Erdreichbohrung 2 gebildet. In dem Ringraum 8 befindet sich üblicherweise Dämmersuspension, Wasser und/oder Geröll aus dem umgebenden Erdreich.

Im folgenden werden die einzelnen Verfahrensschritte zur Durchführung des ersten erfindungsgemäßen Verfahrens erläutert, das auch als Kontraktorverfahren bezeichnet werden kann. Bei dem vorliegenden Verfahren wird zunächst der Umkehrabschnitt 7 des Rohres 4 verschlossen. Dies geschieht vorzugsweise mit einer abdichtenden Masse 10, beispielsweise einem Bindemittel, wie Zement. Hierfür wird ein Schlauch 9 in den ersten Rohrabschnitt 5 eingeführt, durch den die Bindemittelsuspension 10 eingefüllt wird. Der erste Rohrabschnitt 5, der auch als erster Schenkel bezeichnet werden kann, sowie der zweite Rohrabschnitt 6, der auch als zweiter Schenkel bezeichnet werden kann, sind mit Wasser 12 gefüllt. Der Zustand des Verschließens des Umkehrstückes 7 zur Erzeugung eines Druckwiderlagers ist in Figur 1a) gezeigt.

Nach dem Aushärten des Bindemittels 10 im Umkehrabschnitt 7, werden in einem der beiden Rohrabschnitte, vorliegend in dem ersten Rohrabschnitt 5, oberhalb des so gebildeten Druckwiderlagers 10 Öffnungen 15 in die Rohrwandung eingebracht. Dies geschieht vorzugsweise mittels einer Düsenvorrichtung 13, die einen Hochdruckwasserstrahl erzeugen kann. Das Wasser wird durch den Schlauch 14 zur Düse 13 gepresst und tritt an der Düse 13 an einer oder mehreren Öffnungen über dem Umfang aus. Durch den Druck des Wassers wird der Rohrabschnitt 5 aufgeschnitten. Dabei erfolgt das Aufschneiden bei gleichzeitigem Hochziehen des Schlauchs 14 bzw. der Düse 13, so dass ein oder mehrere längliche Schlitze im Mantelabschnitt des Rohres 4 erzeugt werden. Das Hochziehen des Schlauchs 14 bzw. der Düse 13 ist durch einen Pfeil dargestellt. Vorzugsweise haben der oder die Schlitze eine Länge von 10 bis 50 cm, insbesondere von 25 bis 30 cm. Dieser beschriebene Zustand des Einbringens der Öffnungen 15 bzw. Schlitze in die Wandung des Rohres 4 ist in Figur 1b) gezeigt.

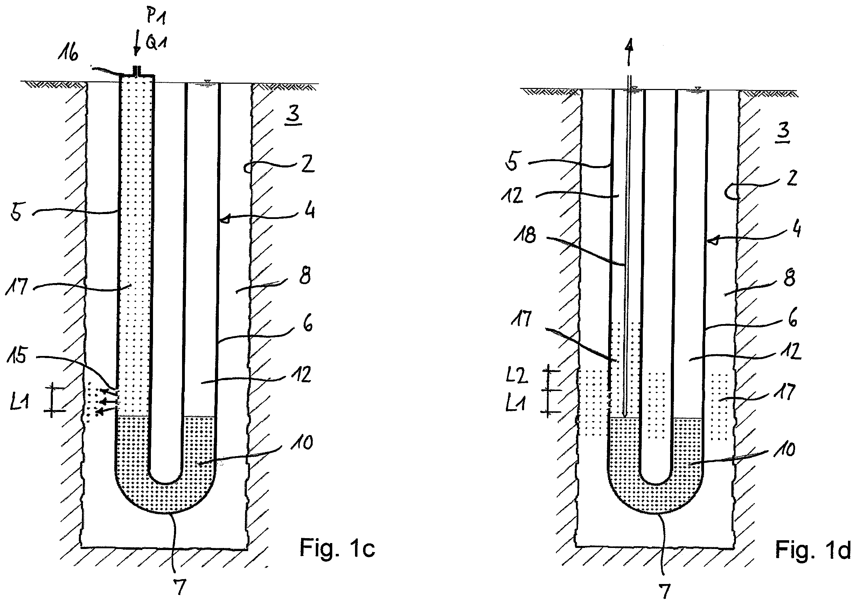

Nach dem Perforieren des Rohres 4 wird der Schlauch 14 mit Düsenvorrichtung 13 wieder aus dem Rohrabschnitt 5 herausgezogen. Nun wird der Rohrabschnitt 5 unter Verdrängung des sich dort befindlichen Wassers mit Bindemittel 17 aufgefüllt. Anschließend wird auf den aufgeschnittenen Rohrabschnitt 5 an dem Rohrende ein Abdichtelement 16 aufgesetzt, das auch als Kopfpacker bezeichnet werden kann. Es wird dann durch eine Öffnung im Abdichtelement 16 ein Bindemittel 17 in den aufgeschnittenen Rohrabschnitt 5 mit hohem Druck eingepresst. Das Bindemittel 17 wird durch die Öffnungen 15 in den Bohrungsringraum 8 gepresst, der zwischen dem Rohr 4 und der Erdreichbohrung 2 gebildet ist. Dieser Vorgang ist in Figur 1c gezeigt. Hier ist auch die Länge L1 eingezeichnet, über welche der erste Rohrabschnitt 5 im ersten Verfahrensschritt perforiert worden ist. Das durch die Öffnungen 15 eingepresste Bindemittel 17 verteilt sich über den gesamten Umfang des Rohres 4, also nicht nur um den ersten Rohrabschnitt 5 herum, sondern auch um den zweiten Rohrabschnitt 6 herum. Dies kann insbesondere dann sicher erreicht werden, wenn mehrere, über den Umfang verteilte Schnitte ausgeführt wurden, durch welche das Bindemittel 17 in den Ringraum 8 eintreten kann. Dies ist hier jedoch nicht dargestellt.

Am Abdichtelement 16 wird während des Verspressvorganges kontinuierlich der Druck P1 und der Durchfluss Q1 gemessen. Die Injektion wird beendet, wenn sich vorher festgelegte Abbruchkriterien im Druck P1 und im Durchfluss Q1 einstellen.

Nach dem Verfüllen und Verpressen des Rohres 4 mit Bindemittel 17 wird in einem nächsten Verfahrensschritt der mit Bindemittel 17 verfüllte Rohrabschnitt 5 ausgespült, was in Figur 1d) gezeigt ist. Hierfür wird ein Spülschlauch 18 in den entsprechenden Rohrabschnitt 5 eingeführt, und zwar vorzugsweise bis auf die Tiefe des eingebrachten Druckwiderlagers 10. Durch das Einpressen von Wasser 12 in den Spülschlauch 18, wird die in dem Rohrabschnitt 5 darüber liegende Zementsuspensionssäule nach oben aus dem Rohrabschnitt 5 herausgespült.

Als nächstes werden die Schritte gemäß den Figuren 1b) bis 1d) beliebig oft wiederholt, d. h. nach dem Ausspülen des Rohrabschnitts 5 wird ein zweiter Teilabschnitt des Rohres in der oben beschrienen Art, vorzugsweise über die dieselbe Länge L2 = L1, mit Öffnungen 15 versehen bzw. aufgeschnitten. Anschließend wird dieser zweite Teilabschnitt mit einem Bindemittel verpresst, so dass der zwischen dem Rohr 4 und der Erdreichbohrung 2 gebildete Bohrungsringraum 8 über eine größere Höhe abgedichtet ist. Im nächsten Schritt wird dann wiederum das in dem Rohrabschnitt 5 verbliebene Bindemittel in der oben beschriebenen Art nach dem Andicken des Bindemittels ausgespült.

Die oben beschriebenen Schritte 1b) bis 1d) werden je nach Bedarf, d. h. nach gewünschter Höhe des abzudichtenden Bohrungsbereichs, beliebig oft hintereinander durchgeführt. Dabei erfolgt eine hydraulische Abdichtung des Ringraums, so dass auch die oberhalb bzw. unterhalb dieses verfüllten Abschnitts liegenden Bereiche voneinander hydraulisch getrennt sind.

Zur Kontrolle der Abdichtungsmaßnahmen wird in bevorzugter Weiterbildung der Erfindung in dem zweiten Rohrabschnitt 6 ein Parameter für unter der Erdoberfläche bzw. zwischen den Erdschichten stattfindenden chemischen Reaktionen gemessen. Hierfür wird vorzugsweise ein Temperatursensor (nicht dargestellt) in den aufgeschnittenen oder nicht-aufgeschnittenen Rohrabschnitt 5, 6 eingeführt. Mit diesem lässt sich die Temperatur im Erdreich entlang des Rohres 4 messen. Die über der Länge des Rohrabschnitts bzw. über der Zeit gemessenen Temperaturen werden erfasst und miteinander verglichen. Ein gegenüber dem natürlichen Temperaturanstieg der Erdwärme anormaler Temperaturanstieg in einer bestimmten Tiefe deutet darauf hin, dass hier chemische Reaktionen stattfinden. Beispielsweise kann es beim Durchbohren einer Anhydrid-Erdschicht dazu kommen, dass aus einer vormals gegenüber der Anhydrid-Schicht hydraulisch abgedichteten wasserhaltigen Erdschicht Wasser durch den Bohrungsringraum 8 in die Anhydrid-Schicht gelangt. Die Anhydrid-Schicht nimmt das Wasser auf, wodurch unter Abgabe von Wärme Gips entsteht.

Das Messen der Temperatur ermöglicht in vorteilhafter Weise, Rückschlüsse auf die hydraulische Abdichtung zwischen den benachbarten Erdschichten zu ziehen. Wird nämlich festgestellt, dass die Temperatur in der Tiefe der Anhydrid-Schicht höher ist, als in den darüber- oder darunterliegenden Erdschichten, bedeutet dies, dass hier eine chemische Reaktion durch Verbinden von Wasser mit der Anhydrid-Schicht zu Gips stattfindet. Das bedeutet wiederum, dass der Bohrungsringraum 8 noch nicht hinreichend abgedichtet ist. Entspricht die Temperatur über der Tiefe in der Anhydrid-Schicht sowie den angrenzenden Erdschichten dem natürlichen Verlauf der Erdwärme, bedeutet dies, dass keine chemische Reaktion mehr stattfindet. Der Bohrungsringraum 8 ist somit zuverlässig abgedichtet und die Erdschichten sind hydraulisch voneinander getrennt. Das Messen der Temperatur kann erfolgt im allgemeinen mit zeitlichem Abstand zum Einpressvorgang, bevorzugt nach dem Abbinden des eingepressten Bindemittels.

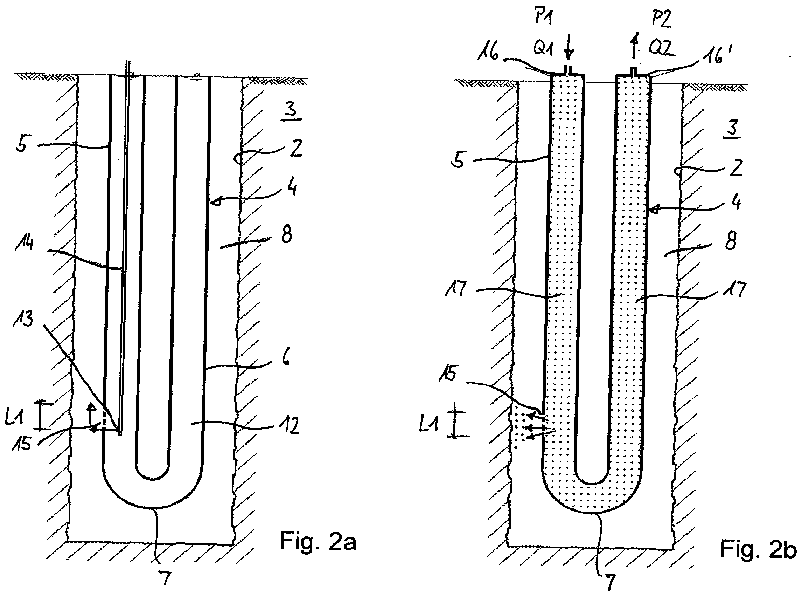

Im folgenden wird eine zweite erfindungsgemäße Ausführungsform des Verfahrens zur Sanierung von Erdreichbohrungen anhand der Figuren 2a) bis 2c) erläutert. Dieses Verfahren entspricht in weiten Teilen demjenigen gemäß den Figuren 1a) bis 1d), so dass hinsichtlich der Gemeinsamkeiten auf die obige Beschreibung Bezug genommen wird. Dabei sind gleiche bzw. einander entsprechende Bauteile mit gleichen Bezugszeichen versehen. Anstelle des Verschließens des Umkehrstückes 7 mit einem Druckwiderlager 10, wie es bei der Ausführungsform gemäß Figur 1 der Fall ist, wird vorliegend der Umkehrabschnitt 7 offen gelassen. Im einzelnen wird das vorliegende Verfahren, welches auch als Umlaufverfahren bezeichnet werden kann, in folgenden Teilschritten durchgeführt.

Zunächst wird in der oben bereits beschriebenen Form in einem der beiden Rohrabschnitte, vorliegend in den ersten Rohrabschnitt 5, Öffnungen 15 in die entsprechende Rohrwandung eingebracht. Dies erfolgt vorzugsweise mittels der Düsenvorrichtung 13, die am unteren Ende des Hochdruckschlauchs 14 angebracht ist. Das Aufschneiden des ersten Rohrabschnittes 5 erfolgt über einen ersten Teilabschnitt, dessen Länge L1 zwischen 10 und 50 cm, vorzugsweise zwischen 25 und 30 cm, lang ist. Dieser Verfahrensschritt ist in Figur 2a) gezeigt. Dabei ist das Rohr 4 vollständig mit Wasser 12 gefüllt.

Nach dem Perforieren des ersten Rohrabschnittes 5 wird das sich im Rohr 4 befindliche Wasser 12 vollständig durch Bindemittel 17 ersetzt. Anschließend werden die Öffnungen der beiden Rohrabschnitte 5, 6 mit Abdichtelementen 16, 16' sowie Messeinrichtungen zum Messen der Drücke P1, P2 sowie der Durchflüsse Q1, Q2 versehen. Das Einbringen des Bindemittels 17 erfolgt nun durch das erste Abdichtelement 16 hindurch in den ersten Rohrabschnitt 5. Durch diesen fließt das Bindemittel 17 hindurch, wobei am Ort des aufgeschnittenen Rohres 4 ein Teil des Bindemittels aufgrund des Pumpendrucks und des hydrostatischen Drucks durch die Öffnungen 15 in den das Rohr 4 umgebenden Ringraum 8 entweicht. Der restliche Anteil fließt weiter den ersten Rohrabschnitt 5 entlang, durch das Umkehrstück 7 und den zweiten Rohrabschnitt 6 wieder hinauf, wo es am zweiten Abdichtelement 16' des zweiten Rohrabschnitts 6 wieder austritt.

Während des Einbringens des Bindemittels 17 in das Rohr 4 wird an beiden Rohrenden kontinuierlich der Druck P und der Durchfluss Q gemessen. Beide Rohrenden sind mit Schiebern versehen (nicht dargestellt), um den Durchfluss stufenlos regeln zu können. Dies wird genutzt, um durch teilweises Schließen des Schiebers am Rohraustritt des Rohrabschnitts 6 den Druck im Rohr 4 künstlich zu erhöhen. Der Injektionsvorgang wird beendet, wenn sich die gemessenen Durchflussmengen Q1, Q2 von eingebrachtem und ausgetretenen Bindemittel 17 nicht mehr wesentlich voneinander unterscheiden. Dieser Verfahrensschritt des Einpressens des Bindemittels ist in Figur 2b) gezeigt.

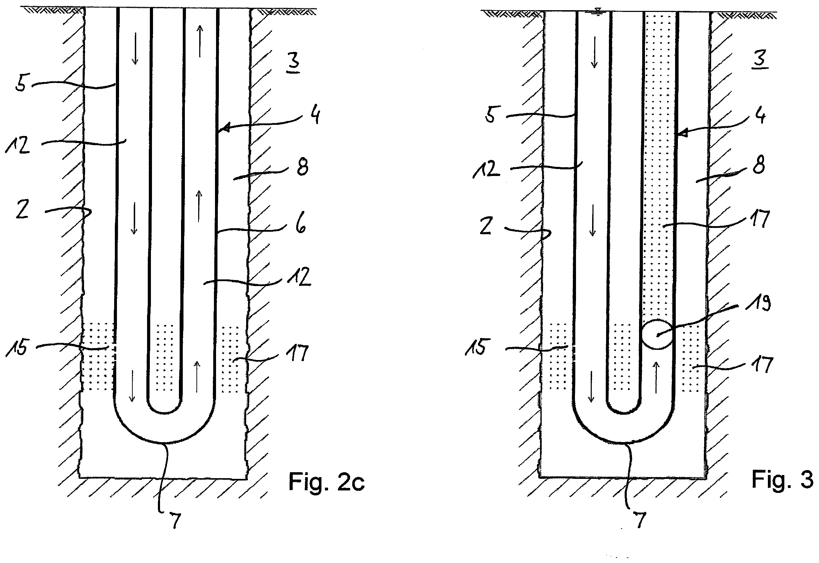

Nach dem Einpressen des Bindemittels werden die beiden Abdichtelemente 16, 16' von den Öffnungen der beiden Rohrabschnitte 5, 6 entfernt. Anschließend wird Wasser in das Rohr 4 eingespült, so dass das Bindemittel 17 vollständig aus dem Rohr 4 entfernt wird. Der Zustand, bei dem mittels des eingespülten Wassers die Bindemittelsäule 17 aus dem Rohr 4 herauspresst wird, ist in Figur 2c) gezeigt. Das Entfernen des Bindemittels 17 aus dem Rohr 4 bzw. das Klarspülen erfolgt erst nach dem Andicken des in den Ringraum 8 eingepressten Bindemittels, um zu verhindern, dass Wasser in den Ringraum 8 gelangt. Durch das Klarspülen wird das Rohr 4 gänzlich von überschüssigem Bindemittel befreit.

Nach dem Ausspülen kann der nächste Teilabschnitt des Rohres 4 verpresst werden, d. h. es werden die Schritte 2a) bis 2c) in der oben beschriebenen Weise wiederholt. Dabei wird der nächst höher oder tiefer liegende Teilabschnitt des Rohres 4, der etwas oberhalb oder unterhalb des zuletzt aufgeschnittenen Rohrabschnittes liegt, aufgeschnitten. Dann erfolgt wiederum das Injizieren des Bindemittels in der oben beschriebenen Art. Durch die Wiederholung der einzelnen Verfahrensschritte wird der zwischen dem Rohr 4 und der Erdreichbohrung 2 gebildete Ringraum 8 über eine größere Höhe abgedichtet. Dabei hängt die Höhe des abzudichtenden Ringbereichs von den Gegebenheiten der Erdschichten bzw. der Höhe der hydraulisch zu trennenden Erdschichten ab.

Auch bei dem vorliegenden Verfahren gemäß der zweiten Ausführungsform ist in vorteilhafter Weise vorgesehen, dass die Temperatur über zumindest einem Teilabschnitt des Rohres 4 gemessen wird. Dies erfolgt in oben beschriebener Weise mittels eines Temperatursensors. Die erfassten Temperaturen erlauben Rückschlüsse über die unter der Erde stattfindenden chemischen Reaktionen bzw. über den Erfolg der Abdichtungsmaßnahmen. Die Temperaturmessung wird nach dem Abbinden des injizierten Materials durchgeführt.

Figur 3 zeigt den Schritt des Ausspülens des Bindemittels 17 aus Figur 2 in einer abgewandelten Ausführungsform. Gleiche Bauteile sind mit gleichen Bezugszeichen wie in den Figuren 1 bzw. 2 versehen. Gemäß dem abgewandelten Verfahren wird zum Ausspülen des Bindemittels 17 ein Trennkörper 19, der vorzugsweise in Form einer Schwammkugel gestaltet ist, in die Öffnung des ersten Rohrabschnittes 5 eingesetzt. Hierdurch wird eine hydraulische Trennung der zwei Medien, Bindemittel 17 und Wasser 12 erreicht. Durch Einpressen von Wasser 12 wird die in Durchströmungsrichtung vor dem Trennkörper 19 liegende Bindemittelsäule 17 aus dem Rohr 4 herausgedrückt. Auf diese Weise wird das Rohr 4 schnell und einfach freigespült, so dass im Anschluss der nächste Rohrabschnitt aufgeschnitten und mit Bindemittel 17 abgedichtet werden kann. Dies erfolgt auf dieselbe Weise, d.h. es wird zunächst ein Teilabschnitt des Rohres 4 mit Öffnungen versehen. Dann wird in das Ende des mit Wasser 12 gefüllten Rohres 4 ein Trennkörper 19 eingesetzt. Anschließend wird durch Einpressen von Bindemittel 17 die in Durchströmungsrichtung vor dem Trennkörper 19 liegende Wassersäule 12 aus dem Rohr 4 herausgedrückt. Nachdem das Wasser 12 vollständig aus dem Rohr 4 entfernt ist, wird das im Rohr 4 befindliche Bindemittel 17 im Umlaufverfahren durch die Öffnungen 15 in den Ringraum 8 zwischen Rohr 4 und Bohrung 2 injiziert. Nach dem Andicken wird das im Rohr 4 befindliche Bindemittel 17 auf die obenbeschriebene Weise wieder aus dem Rohr 4 ausgespült und der nächste Rohrabschnitt kann behandelt werden.

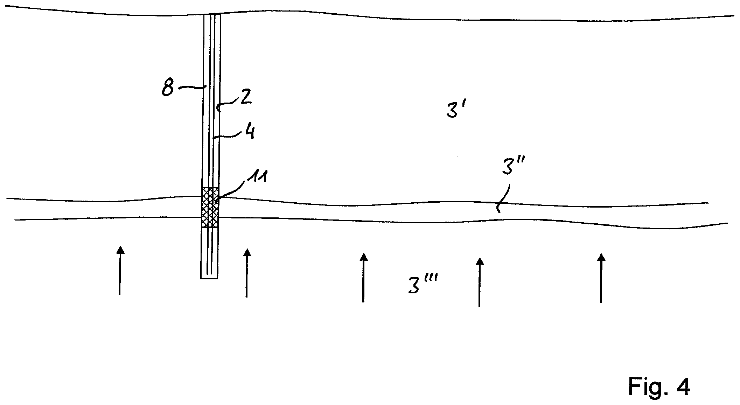

Figur 4 zeigt schematisch eine Erdreichbohrung 2, in der ein Rohr 4 angeordnet ist. Es sind verschiedene Erdschichten 3', 3" und 3"' erkennbar. Unterhalb der Erdoberfläche ist eine erste Erdschicht 3' gezeigt. Darunter kann beispielsweise eine zweite Erdschicht 3" liegen, beispielsweise eine Anhydrid-Schicht. Wiederum darunter liegt eine dritte Schicht 3"', in der Grundwasser aufgenommen ist. Das in dieser dritten Schicht 3"' enthaltene Grundwasser ist "gespannt", d. h. es steht unter Druck, was durch die Pfeile symbolisiert ist. Durch das Einbringen der Bohrung 2 durch die drei Erdschichten 3', 3", 3"' gelangt nun Wasser aus der dritten Schicht 3"' in die Anhydrid-Schicht 3". Dabei verbindet sich das aufsteigende Wasser mit der Anhydrid-Schicht zu Gips, wobei eine Volumenzunahme stattfindet.

Um nun ein Aufsteigen des Grundwassers durch den Bohrungsringraum 8 zu verhindern, wird dieser mit dem erfindungsgemäßen Verfahren abgedichtet bzw. saniert. Dabei können beide der oben genannten Möglichkeiten, entweder das Kontraktorverfahren gemäß den Figuren 1a) bis 1d) oder das Umlaufverfahren gemäß den Figuren 2a) bis 2c) bzw. Figur 3 verwendet werden. Durch das Einpressen des Bindemittels in den Ringraum 8 zumindest im Bereich der Anhydrid-Schicht 3" in mehreren Teilschritten, wird dieser Bereich abgedichtet. Wasser kann somit nicht mehr aus der Grundwasserschicht 3"' nach oben dringen. Die beiden Erdschichten 3", 3"' bzw. Grundwasserstockwerke sind somit sicher gegeneinander hydraulisch abgedichtet. Dieser Bereich 11 ist mit Kreuzschraffur versehen. Dadurch, dass in der oben beschriebenen Weise das Rohr 4 nur über einen Teilabschnitt aufgeschnitten wird, werden beim Injizieren des Bindemittels 17 an den Öffnungen 15 relative hohe Drücke erreicht, so dass das Bindemittel 17 tief in den Ringraum 8 und das diesen umgebende Erdreich eindringen kann. Hierdurch ergibt sich eine besonders gute hydraulische Abdichtung zwischen den genannten Erdschichten 3", 3"'. Als Bindemittel 17 können beispielsweise Zement oder Kunstharze verwendet werden.

### Bezugszeichenliste

- 2: Erdreichbohrung
- 3: Erdschicht/Gebirge
- 4: Rohr
- 5: erster Rohrabschnitt
- 6: zweiter Rohrabschnitt
- 7: Umkehrabschnitt
- 8: Ringraum
- 9: Kontraktorschlauch
- 10: Bindemittel
- 11: Bereich
- 12: Wasser
- 13: Düsenvorrichtung
- 14: Hochdruckschlauch
- 15: Öffnung
- 16: Abdichtelement
- 17: Bindemittel
- 18: Spülschlauch
- 19: Trennkörper

- L: Länge
- P: Druck
- Q: Durchfluss

## Patentansprüche

1. Verfahren zur Sanierung einer Erdreich-Bohrung, in der zumindest ein Rohr (4) eingelassen ist, das U-förmig gestaltet ist und einen ersten Rohrabschnitt (5), einen zweiten Rohrabschnitt (6) und einen Umkehrabschnitt (7) aufweist, der den ersten Rohrabschnitt (5) mit dem zweiten Rohrabschnitt (6) verbindet, wobei zwischen dem zumindest einen Rohr (4) und der Bohrung (2) ein Ringraum (8) gebildet ist, mit den folgenden Verfahrensschritten:
Einbringen zumindest einer Öffnung (15) in einen ersten Teilabschnitt (L1) des Rohres (4) mittels einer in das zumindest eine Rohr (4) eingeführten Vorrichtung (13, 14);
Einbringen eines Bindemittels (17) in das zumindest eine Rohr (4), wobei das Bindemittel (17) durch die zumindest eine Öffnung (15) des Rohres (4) in den Ringraum (8) gelangt; und
Ausspülen des Bindemittels (17) aus dem zumindest einen Rohr (4).

2. Verfahren nach Anspruch 1,
**dadurch gekennzeichnet,**
**dass** das Einbringen der zumindest einen Öffnung (15) in das Rohr (4) mittels einer Düsenvorrichtung (13) zur Erzeugung eines Hochdruckwasserstrahls bewerkstelligt wird, die in das Rohr (4) eingeführt wird.

3. Verfahren nach Anspruch 1 oder 2,
**dadurch gekennzeichnet,**
**dass** das Einbringen der Öffnungen (15) in das zumindest eine Rohr (4) in ein oder mehreren Schritten abschnittsweise entlang des Rohres (4) erfolgt, insbesondere über eine Länge (L1) von etwa 10 cm bis 50 cm je Teilabschnitt.

4. Verfahren nach einem der Ansprüche 1 bis 3,
**dadurch gekennzeichnet,**
**dass** das Einbringen der zumindest einen Öffnung (15) in das Rohr (4) an mehreren Stellen über dem Umfang des Rohres (4) durchgeführt wird.

5. Verfahren nach einem der Ansprüche 1 bis 4,
**dadurch gekennzeichnet,**
**dass** die Schritte Einführen der Düsenvorrichtung (13) und Einbringen der zumindest einen Öffnung (15) in das Rohr (4) in einem der beiden ersten und zweiten Rohrabschnitte (5, 6) durchgeführt werden.

6. Verfahren nach einem der Ansprüche 1 bis 5, **dadurch gekennzeichnet, dass** als weiterer Verfahrensschritt vorgesehen ist:Einbringen eines Temperatursensors zumindest etwa bis auf Höhe des mit ein oder mehreren Öffnungen (15) versehenen Teilabschnitts; und Messen der Temperatur.

7. Verfahren nach Anspruch 6, rückbezogen auf Anspruch 5,
**dadurch gekennzeichnet,**
**dass** das Messen der Temperatur an mehreren Stellen entlang des Rohrabschnitts (6, 5) erfolgt, wobei die über der Länge des Rohrabschnitts (6, 5) bzw. über der Zeit gemessenen Temperaturen erfasst und miteinander verglichen werden.

8. Verfahren nach einem der Ansprüche 5 bis 7, die Ansprüche 6 und 7 jeweils rückbezogen auf Anspruch 5,
**dadurch gekennzeichnet,**
**dass** das Bindemittel (17) unter Überdruck in den mit einer oder mehreren Öffnungen (15) versehenen Rohrabschnitt (5, 6) eingebracht wird, wobei dazu insbesondere ein Abdichtelement (16) verwendet wird, das in das Rohrende des Rohrabschnitts (5, 6) eingeführt wird.

9. Verfahren nach einem der Ansprüche 1 bis 8,
**dadurch gekennzeichnet,**
**dass** der Schritt des Ausspülens nach dem Andicken des durch die zumindest eine Öffnung (15) in den Ringraum (8) injizierten Bindemittels (17) durchgeführt wird.

10. Verfahren nach einem der Ansprüche 1 bis 9,
**dadurch gekennzeichnet,**
**dass** in dem Rohr (4) Wasser vorhanden ist, wobei das Wasser nach dem Einbringen der zumindest einen Öffnung (15) in das Rohr (4), zumindest aus diesem Rohrabschnitt (5, 6), vollständig durch Bindemittel (17) ersetzt wird.

11. Verfahren nach einem der Ansprüche 1 bis 10,
**dadurch gekennzeichnet,**
**dass** während des Einbringens des Bindemittels (17) in das Rohr (4) als weiterer Verfahrensschritt vorgesehen ist:
Ermitteln des Drucks (P1) des Bindemittels (17) und/oder Ermitteln des Durchflusses (Q1) des Bindemittels (17),
wobei das Einbringen des Bindemittels (17) in das Rohr (4) in Abhängigkeit von dem ermittelten Druck (P1) und/oder dem ermittelten Durchfluss (Q1) erfolgt.

12. Verfahren nach einem der Ansprüche 5 bis 11, die Ansprüche 6 bis 11 jeweils rückbezogen auf Anspruch 5,
**dadurch gekennzeichnet**,
das Einbringen des Bindemittels (17) im Kontraktor-Injektionsverfahren erfolgt, wobei vor dem Einbringen der zumindest einen Öffnung (15) in den Rohrabschnitt (5) der Umkehrabschnitt (7) zur Erzeugung eines Druckwiderlagers (10) verschlossen wird, wobei das Verschließen des Umkehrabschnitts (7) insbesondere mittels eines in den Umkehrabschnitt (7) eingefüllten aushärtbaren Bindemittels (17) erfolgt.

13. Verfahren nach Anspruch 12,
**dadurch gekennzeichnet,**
**dass** das Ausspülen des Bindemittels (17) durch Einführen eines Spülschlauchs (18) in den mit ein oder mehreren Öffnungen (15) versehenen Rohrabschnitt (5) erfolgt, wobei der Spülschlauch bis auf die Tiefe des Druckwiderlagers (10) herabgelassen wird.

14. Verfahren nach einem der Ansprüche 1 bis 13,
**dadurch gekennzeichnet,**
**dass** das Einbringen des Bindemittels (17) im Umlaufverfahren erfolgt, wobei das Bindemittel (17) durch einen der beiden Rohrabschnitte (5, 6) eingebracht wird und am anderen der beiden Rohrabschnitte (6, 5) wieder austritt.

15. Verfahren nach einem der Ansprüche 1 bis 14,
**dadurch gekennzeichnet,**
**dass** als weiterer Verfahrensschritt während des Einbringens des Bindemittels (17) vorgesehen ist:
Regelung des Mengendurchflusses (Q1, Q2) des Bindemittels zumindest an einem der beiden Rohrabschnitte (5, 6), insbesondere stufenlos.

## Claims

1. A method for restoring a borehole in the soil into which at least one pipe (4) is introduced which is U-shaped and has a first pipe section (5), a second pipe section (6) and a return section (7) which connects the first pipe section (5) with the second pipe section (6), wherein between the at least one pipe (4) and the borehole (2) an annular space (8) is formed, with the following method stages:
producing at least one opening (15) in the first partial section (L1) of the pipe (4) by means of a device (13, 14) introduced into the at least one pipe (4);
introducing a binding agent (17) into the at least one pipe (4), wherein the binding agent (17) passes through the at least one opening (15) in the pipe (4) into the annular space (8); and
flushing the binding agent (17) out of the at least one pipe (4).

2. The method according to claim 1,
**characterised in**
**that** the producing of the at least one opening (15) into the pipe (4) is effected by means of a nozzle device (13) introduced into the pipe (4) in order to produce a high-pressure water jet.

3. The method according to claim 1 or 2,
**characterised in**
**that** the producing of the openings (15) into the at least one pipe (4) takes place in one or more steps in sections along the pipe (4), in particular over a length (L1) of around 10 cm to 50 cm per partial section.

4. The method according to any one of claims 1 to 3,
**characterised in**
**that** the producing of the at least one opening (15) into the pipe (4) is carried out at several points around the circumference of the pipe (4).

5. The method according to any one of claims 1 to 4,
**characterised in**
**that** the steps of introducing the nozzle device (13) and producing the at least one opening (15) into the pipe (4) are carried out in the two first and second pipe sections (5, 6).

6. The method according to any one of claims 1 to 5, **characterised in that** the following is provided as a further method step: introducing a temperature sensor at least as far as the partial section provided with one or more openings (15); and measuring of the temperature.

7. The method according to claim 6, relating back to claim 5,
**characterised in**
**that** measuring of the temperature takes place at several points along the pipe section (6, 5), wherein the temperatures measured over the length of the pipe section (6, 5) and/or over time are recorded and compared with each other.

8. The method according to any one of claims 5 to 7, claims 6 and 7 relating back to claim 5,
**characterised in**
**that** the binding agent (17) is introduced at high pressure into the pipe section (5, 6) provided with one or more openings (15), wherein, in particular, for this a sealing element (16) is used which is introduced into the pipe section (5, 6).

9. The method according to any one of claims 1 to 8,
**characterised in**
**that** the step of flushing is carried out after thickening of the binding agent (17) injected through the at least one opening (15) into the annular space (8).

10. The method according to any one of claims 1 to 9,
**characterised in**
**that** water is present in the pipe (4), wherein the water, after the introduction of the at least one opening (15) into the pipe (4), at least from this pipe section (5, 6) is completely replaced by binding agent (17).

11. The method according to any one of claims 1 to 10,
**characterised in**
**that** during the introduction of the binding agent (17) into the pipe (4) the following are envisaged as a further method step:
determining the pressure (P1) of the binding agent (17) and/or
determining the throughflow (Q1) of the binding agent (17),
wherein the introduction of the binding agent (17) into the pipe (4) takes place in dependence on the determined pressure (P1) and/or the determined throughflow (Q1).

12. The method according to any one of claims 5 to 11, claims 6 to 11 each relating back to claim 5,
**characterised in**
**that** the introduction of the binding agent (17) takes place by way of the contractor injection method, wherein before the introduction of the at least one opening (15) into the pipe section the return section (7) is closed to produce a pressure abutment (10), wherein closing of the return section (7) takes place, in particular, by means of hardenable binding agent (17) filled into the return section (7).

13. The method according to claim 12,
**characterised in**
**that** the binding agent (17) is flushed out through the introduction of a flushing tube (18) into the pipe section (5) provided with one or more openings (15), wherein the flushing tube is lowered up to the depth of the pressure abutment (10).

14. The method according to any one of claims 1 to 13,
**characterised in**
**that** the binding agent (17) is introduced in a circulation process wherein the binding agent (17) is introduced via one of the two pipe sections (5, 6) and emerges again at the other one of the two pipe sections (6, 5).

15. The method according to any one of claims 1 to 14,
**characterised in**
**that** the following further method step is provided during the introduction of the binding agent (17):
controlling the quantity throughflow (Q1, Q2) of the binding agent at least on one of the two pipe sections (5, 6), in particular continuously.

## Revendications

1. Procédé d'assainissement d'un forage dans la terre, dans lequel est introduit au moins un tuyau (4) qui est conçu en forme de U et qui comporte un premier tronçon de tuyau (5), un deuxième tronçon de tuyau (6) et un tronçon de renvoi (7) qui relie le premier tronçon de tuyau (5) avec le deuxième tronçon de tuyau (6), entre l'au moins un tuyau (4) et le forage (2) étant conçu un espace annulaire (8), comportant les étapes de procédé suivantes:
ménager au moins une ouverture (15) dans un premier tronçon partiel (L1) du tuyau (4) au moyen d'un dispositif (13, 14) introduit dans l'au moins un tuyau (4) ;
introduire un agent liant (17) dans l'au moins un tuyau (4), à travers l'au moins une ouverture (15) du tuyau (4), l'agent liant (17) arrivant dans l'espace annulaire (8) ; et
rincer l'agent liant (17) hors de l'au moins un tuyau (4).

2. Procédé selon la revendication 1,
**caractérisé en ce**
**que** le ménagement de l'au moins une ouverture (15) dans le tuyau (4) est réalisé au moyen d'un dispositif de buses (13) destiné à créer un jet d'eau haute pression que l'on introduit dans le tuyau (4).

3. Procédé selon la revendication 1 ou 2,
**caractérisé en ce**
**que** le ménagement des ouvertures (15) dans l'au moins un tuyau (4) a lieu en une ou en plusieurs étapes, par tronçons le long du tuyau (4), notamment sur une longueur (L1) d'environ 10 cm à 50 cm par tronçon partiel.

4. Procédé selon l'une quelconque des revendications 1 à 3,
**caractérisé en ce**
**que** le ménagement de l'au moins une ouverture (15) dans le tuyau (4) est réalisé à plusieurs emplacements sur la périphérie du tuyau (4).

5. Procédé selon l'une quelconque des revendications 1 à 4,
**caractérisé en ce**
**que** les étapes de l'introduction du dispositif de buses (13) et du ménagement de l'au moins une ouverture (15) dans le tuyau (4) sont réalisées dans l'un des deux premier et deuxième tronçons de tuyaux (5, 6).

6. Procédé selon l'une quelconque des revendications 1 à 5, **caractérisé en ce qu'**il est prévu en tant qu'étape additionnelle du procédé : l'introduction d'un capteur thermique au moins approximativement jusqu'à la hauteur du tronçon partiel pourvu d'une ou de plusieurs ouvertures (15) ; et la mesure de la température.

7. Procédé selon la revendication 6, rapportée à la revendication 5,
**caractérisé en ce**
**que** la mesure de la température a lieu sur plusieurs emplacements le long du tronçon de tuyau (6, 5), les températures mesurées sur la longueur du tronçon de tuyau (6, 5) et/ou dans le temps étant enregistrées et comparées entre elles.

8. Procédé selon l'une quelconque des revendications 5 à 7, des revendications 6 et 7 rapportées respectivement à la revendication 5,
**caractérisé en ce**
**que** l'agent liant (17) est introduit sous surpression dans le tronçon de tuyau (5, 6) pourvu d'une ou de plusieurs ouvertures (15), à cet effet étant utilisé au moins un élément d'étanchéité (16) que l'on introduit dans l'extrémité de tuyau du tronçon de tuyau (5, 6).

9. Procédé selon l'une quelconque des revendications 1 à 8,
**caractérisé en ce**
**que** l'étape du rinçage est réalisée après l'épaississement de l'agent liant (17) injecté à travers l'au moins une ouverture (15) dans l'espace annulaire (8).

10. Procédé selon l'une quelconque des revendications 1 à 9,
**caractérisé en ce**
**que** dans le tuyau (4) se trouve de l'eau, après le ménagement de l'au moins une ouverture (15) dans le tuyau (4), au moins l'eau dudit tronçon de tuyau (5, 6) étant totalement remplacée par l'agent liant (17).

11. Procédé selon l'une quelconque des revendications 1 à 10,
**caractérisé en ce**
**que** pendant l'introduction de l'agent liant (17) dans le tuyau (4), il est prévu en tant qu'étape supplémentaire du procédé :
la détermination de la pression (P1) de l'agent liant (17) et/ou
la détermination du débit (Q1) de l'agent liant (17), l'introduction de l'agent liant (17) dans le tuyau (4) ayant lieu en fonction de la pression déterminée (P1) et/ou du débit déterminé (Q1).

12. Procédé selon l'une quelconque des revendications 5 à 11, les revendications 6 à 11 rapportées chacune à la revendication 5,
**caractérisé en ce**
**que** l'introduction de l'agent liant (17) a lieu par procédé d'injection par trémie, avant le ménagement de l'au moins une ouverture (15) dans le tronçon de tuyau (5), le tronçon de renvoi (7) étant fermé pour créer une butée de pression (10), la fermeture du tronçon de renvoi (7) ayant lieu notamment au moyen d'un agent liant (17) durcissable chargé dans le tronçon de renvoi (7).

13. Procédé selon la revendication 12,
**caractérisé en ce**
**que** le rinçage de l'agent liant (17) a lieu par introduction d'un flexible de rinçage (18) dans le tronçon de tuyau (5) pourvu d'une ou de plusieurs ouvertures (15), le flexible de rinçage étant descendu jusqu'à la profondeur de la butée de pression (10).

14. Procédé selon l'une quelconque des revendications 1 à 13,
**caractérisé en ce**
**que** l'introduction de l'agent liant (17) a lieu par procédé de recirculation, l'agent liant (17) étant introduit par l'intermédiaire de l'un des deux tronçons de tuyau (5, 6) et ressortant sur l'autre des deux tronçons de tuyau (6, 5).

15. Procédé selon l'une quelconque des revendications 1 à 14,
**caractérisé en ce**
**qu'**il est prévu en tant qu'étape additionnelle du procédé, pendant l'introduction de l'agent liant (17) :
la régulation du débit quantitatif (Q1, Q2) de l'agent liant, notamment graduellement, au moins sur l'au des deux tronçons de tuyau (5, 6).
